# EUROPEAN PATENT APPLICATION

(11) **EP 3 824 719 A1**
(43) Date of publication of application: **26.05.2021**
(21) Application number: 19848730.8
(22) Date of filing: 17.07.2019
(51) Int. Cl.: A01K 1/00, A01K 1/01

(54) **MULTI-STOREY ANIMAL HOUSE**

(30) Priority: 07.08.2018 CN 201810891562
(71) Applicant: Yu, Ping, Chongqing 400039 (CN)
(72) Inventor: Yu, Ping, Chongqing 400039 (CN)
(74) Representative: Gallego Jiménez, José Fernando
(86) International application number: PCT/CN2019/096250
(87) International publication number: WO 2020/029759

(57) **Abstract**

A multi-storey animal house, comprising a multi-storey house body (1), a plurality of breeding storeys being provided in the house body (1), and the breeding storeys including a first breeding storey (10), a second breeding storey (9), a third breeding storey (8), a fourth breeding storey (7), a first cultivating storey (5) and a second cultivating storey (6) which are provided in sequence from top to bottom.

## Description

### TECHNICAL FIELD

The present invention relates to the field of animal breeding, in particular to a multi-storey animal house.

### BACKGROUND

At present, the ground breeding method as widely used in the animal breeding industry originates from a concept that the ground breeding manner in the traditional breeding and grazing process may make it easy to access feedstuff and easy to manage the breeding houses. However, this method takes up a large area of land, and the breeding utilization rate per unit area is low. Especially, in modern times, in the case that a large number of animals are raised with farms, the farms generally include multiple stages of breeding activities, such as animal mating, parturition, nursing, and cultivation. The animal breeding in each stage is generally managed with separate breeding houses, which thereby causes an increasing demand for land area and further increasing breeding cost. In addition, most of the existing breeding houses are single-storey shed houses. Such houses have a relatively thin structure, have poor performance in terms of wind and snow resistance, ventilation, deodorization and temperature regulation in different seasons, which thereby has a great impact on breeding of animals. Moreover, the existing feces treatment in the farms is generally performed by providing a black film pool outside the breeding house to execute the composting treatment. Although the feces are utilized, the utilization rate of feces is relatively low because a large amount of fertilizer is lost in the composting process due to the exposure to the wind, sunshine, rain and other environmental changes. In conclusion, the existing animal breeding methods have problems such as a large footprint, a low land utilization rate per unit area, poor safety performance of houses, unstable breeding environment control, a low feces recycling rate, and poor performance in environmental protection and energy saving.

### SUMMARY

An object of the present application is to provide a multi-storey animal house to solve the problem in that the single-storey shed houses adopted in the current animal breeding process have a relatively low breeding efficiency per unit area.

In order to achieve the object, the present invention provides a solution as follows. A multi-storey animal house comprises a multi-storey house body in which multiple breeding storeys are provided, wherein an air exchange mechanism in communication with each breeding storey is arranged at one end of the house body, and the air exchange mechanism is divided into air intake managing ends and exhaust managing ends, the exhaust managing ends being arranged on both sides of each air intake managing end respectively.

The solution has the following principle and advantages. By adopting the multi-storey animal house body, the animal breeding activities can be carried out on storeys of the house body, and multiple storeys of breeding houses with different functions can be built in a height direction in the case that the footprint is the same as that of the single-storey breeding house, and it is also possible to build independent breeding storeys for animal breeding activities at different growth stages. In this way, the animal breeding activities in respective stages can be integrated in a same animal breeding house body, and the breeding activities in various growth stages remain relatively independent, which can not only integrate the breeding of animals in multiple growth stages with a relatively small land area, but also prevent the breeding activities of animals in different growth stages from greatly affecting each other. The provided air exchange mechanism can adjust and control the air environment of each breeding storey in the multi-storey animal house. The air entering the breeding storey is managed and adjusted through the air intake managing ends, and the air in the breeding storey is managed and adjusted through the exhaust managing ends to meet the breeding requirements in air exchange, ventilation, deodorization and the like. The air exchange process in different breeding storeys is managed at the same end of the house body, which thereby occupies a less internal space of the breeding storey and can manage the air exchange in different breeding storeys more uniformly. Thus, the air environment in the process of animal breeding can be managed and controlled more conveniently with the multi-storey animal houses, which is more conducive to managing the animal breeding scientifically and efficiently and thereby is beneficial to improve breeding benefits. According to the multi-storey house structure, it is possible to breed animals in different growth stages under the same land area as a single conventional breeding house. Thus, compared with traditional breeding farms, the multi-storey house structure occupies less land and has a higher land utilization rate for breeding per unit area.

Furthermore, an interlayer is arranged at the bottom of each breeding storey, and multiple fecal ditch branches are provided parallel to each other in the interlayer, wherein a hole in communication with each fecal ditch branch is formed in the ground of the breeding storey at the top of the fecal ditch branch, and air ducts are arranged in parallel on both sides of each fecal ditch branch respectively. According to such a preferable configuration, feces discharged by animals in the breeding storey can be collected through the fecal ditch branches and the holes above to keep the breeding storey clean. By providing the air ducts on both sides of each fecal ditch branch, the ventilation can be carried out on one hand in a hidden way with the interlayer space, and on the other hand, the heat exchange and temperature adjustment can be performed on the air in the air ducts under the help of the heat of the feces in the fecal ditch branches, so that the air environment in the breeding storey after the ventilation is more suitable for animal growth.

Furthermore, the air exchange mechanism is a ventilation building, the air intake managing end is an air intake chamber, the exhaust managing end is an exhaust chamber, and an environment regulating mechanism is provided in each breeding storey of the house body, wherein one end of the air duct is in communication with the air intake chamber, the other end of the air duct extends into the environment regulating mechanism, and an upper portion of one end of the fecal ditch branch is in communication with the exhaust chamber. According to such a preferable configuration, the ventilation building serves as air intake and exhaust ports of the house body, and the environment regulating mechanism serves as a regulating mechanism for the external air before entering the breeding storey. The ventilation building transmits the external air into the environment regulating mechanism and the breeding area through the air intake chamber and the air duct. In the breeding area, the foul air entering the fecal ditch branch through the hole and the odor in the fecal ditch branch are discharged by entering the exhaust chamber through the upper portion of the fecal ditch branch.

Furthermore, the environment regulating mechanism is directly opposite to the air exchange mechanism in the house body. According to such a preferable configuration, the air duct and the fecal ditch branch are more smooth, which allows a better effect in ventilation, feces discharging and deodorization and is further conducive to reducing construction costs of the multi-storey animal house.

Furthermore, the breeding storeys comprise a first breeding storey, a second breeding storey, a third breeding storey, a fourth breeding storey, a first cultivating storey, and a second cultivating storey sequentially arranged from top to bottom. According to such a preferable configuration, the breeding storey structure may be divided from top to bottom into multiple stages of animals from breeding to marketing, which covers the overall natural breeding process of animals from mating-birthing to maturing-marketing, so that the animal breeding activities in the house body can be carried out from top to bottom in accordance with the growth process of animals. Thus, on one hand, different breeding stages of animals are integrated in this multi-storey animal house, and on the other hand, the breeding activities can be carried out and managed from top to bottom in accordance with the animal growth sequence, thereby enabling the animal breeding more efficient.

Furthermore, an air inlet is formed on a side wall of one end, near the ventilation building, of the air duct at the end of each breeding storey, and another air inlet is formed on a side wall of each air intake chamber at the end of the house body; and an air outlet chamber in communication with the exhaust chamber is provided at the top of the ventilation building and disposed higher than the top of the house body, and multiple exhaust fans are mounted on a side wall of the exhaust chamber facing the house body. According to such a preferable configuration, the air inlet of the air intake chamber is located in the middle of one end of the house body, and the air inlets of the air ducts on the both sides may not interfere with the exhaust chamber. The air outlet chamber is configured to discharge the foul air and odor in the exhaust chamber at high altitude outside the house body, and the air outlet and the air inlet are located on different sides of the house body, which can effectively prevent the foul air and odor as discharged from flowing back into the house body.

Furthermore, a feces outlet in communication with the fecal ditch branch is provided in each breeding storey, wherein the environment regulating mechanism is located on both sides of the feces outlet, and the feces outlets in adjacent storeys are in communication with each other. According to such a preferable configuration, the distribution of the feces outlets and the environment regulating mechanisms allows that the feces during the animal breading can be discharged in quantity and the breeding environment of the breeding storeys can be adjusted in large areas, and the feces outlets in communication with each other facilitate the centralized collection and diversion of the feces in different storeys.

Furthermore, a composting storey is provided under the breeding storey, a feces collecting tank is provided under the ground below the composting storey, and the composting storey has a for-sale layer and a processing layer located below the former, wherein the for-sale layer is provided with a tilted main fecal ditch whose lower end is in communication with the feces collecting tank, and the feces outlets of storeys above the for-sale layer are all in communication with the top of the main fecal ditch. According to such a preference, the composting storey is configured to perform the composting treatment to make full use of the feces; the feces collecting tank is configured to store the feces concentratedly; and the main fecal ditch is configured to divert the feces discharged from the multiple feces outlets to the feces collecting tank, so that the house body integrates the functions of concentratedly storing and timely recycling animal breeding wastes.

Furthermore, a deodorizing mechanism and multiple composting chambers are arranged in the composting storey. According to such a preference, the house body integrates the indoor composting function, which can process the feces produced by the breeding activities and generate reusable compost. The deodorizing mechanism can reduce the odor of feces and reduce the impact on the environment.

Furthermore, a corridor is arranged outside each storey of the house body, and an external staircase for connecting the corridors of the all storeys is arranged outside the house body, and a lighting window is provided in a wall of the house body. According to such a preferable configuration, the passage for the breeding staff to go upstairs and downstairs is relatively independent of the passage for the animals to go upstairs and downstairs. The passage for the breeding staff to go upstairs and downstairs does not occupy the breeding managing space inside the house body, and the provided lighting window ensures sufficient light inside the house body and facilitates execution of the breeding managing activities.

### BRIEF DESCRIPTION OF THE DRAWINGS

FIG. 1 is a top view according to an embodiment of the present invention;
FIG. 2 is a front view according to an embodiment of the present invention;
FIG. 3 is a rear view according to an embodiment of the present invention;
FIG. 4 is a left side view according to an embodiment of the present invention;
FIG. 5 is a right side view according to an embodiment of the present invention;
FIG. 6 is an A-A direction view according to an embodiment of the present invention;
FIG. 7 is a top view of a processing layer according to an embodiment of the present invention;
FIG. 8 is a top view of a for-sale layer according to an embodiment of the present invention;
FIG. 9 is a top view of a first cultivating storey according to an embodiment of the present invention;
FIG. 10 is a top view of a fourth breeding storey according to an embodiment of the present invention;
FIG. 11 is a distribution diagram of fecal ditches and air ducts in an interlayer according to an embodiment of the present invention;
FIG. 12 is a top view of a third breeding storey according to an embodiment of the present invention;
FIG. 13 is a top view of a second breeding storey according to an embodiment of the present invention;
FIG. 14 is a top view of a first breeding storey according to an embodiment of the present invention;
FIG. 15 is an enlarged schematic view at position B in FIG. 9;
FIG. 16 is an enlarged schematic view at position C in FIG. 9; and
FIG. 17 is an enlarged schematic view at position D in FIG. 11.

### DETAILED DESCRIPTION

The present invention will be further described in detail below through specific embodiments.

Reference signs in the drawings of the Description include: house body 1, ventilation building 2, air outlet chamber 21, exhaust fan 22, exhaust chamber 23, air intake chamber 24, fly-proof and bird-proof net 25, external staircase 3, composting storey 4, composting chamber 44, main fecal ditch 45, first cultivating storey 5, second cultivating storey 6, fourth breeding storey 7, third breeding storey 8, second breeding storey 9, first breeding storey 10, fecal ditch branch 12, air duct 13, lighting window 102, elevator 103, feces outlet 108, environment regulating chamber 109, water curtain pool 110, wet curtain 114, air inlet 115, air exhaust window 116, and air exchange fan 117.

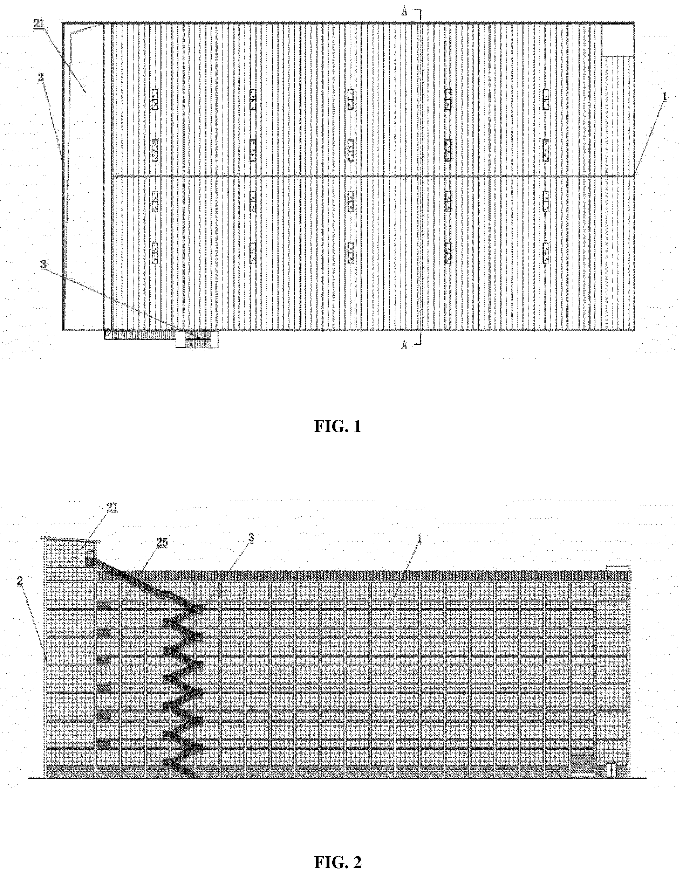

Embodiments: As shown in FIGs. 1 to 6, a multi-storey animal house includes a multi-storey house body 1, and a feces collecting tank is excavated underground under the bottom of the house body 1. A composting storey 4 is provided at the bottom of the house body 1, and multiple breeding storeys are provided above the composting storey 4. The breeding storeys include a first breeding storey 10, a second breeding storey 9, a third breeding storey 8, a fourth breeding storey 7, a first cultivating storey 5, and a second cultivating storey 6 sequentially arranged from top to bottom. An interlayer is arranged at the bottom of each breeding storey, and six fecal ditch branches 12 are provided parallel to each other in the interlayer. A hole in communication with each fecal ditch branch 12 is formed in the ground of the breeding storey at the top of the fecal ditch branch 12, and air ducts 13 are provided in parallel on both sides of each fecal ditch branch 12 respectively. A row of breeding stalls disposed side by side along a length direction of each fecal ditch branch 12 is arranged above the fecal ditch branch 12, and each breeding stall is disposed across the fecal ditch branch 12 adjacent to the air duct 13.

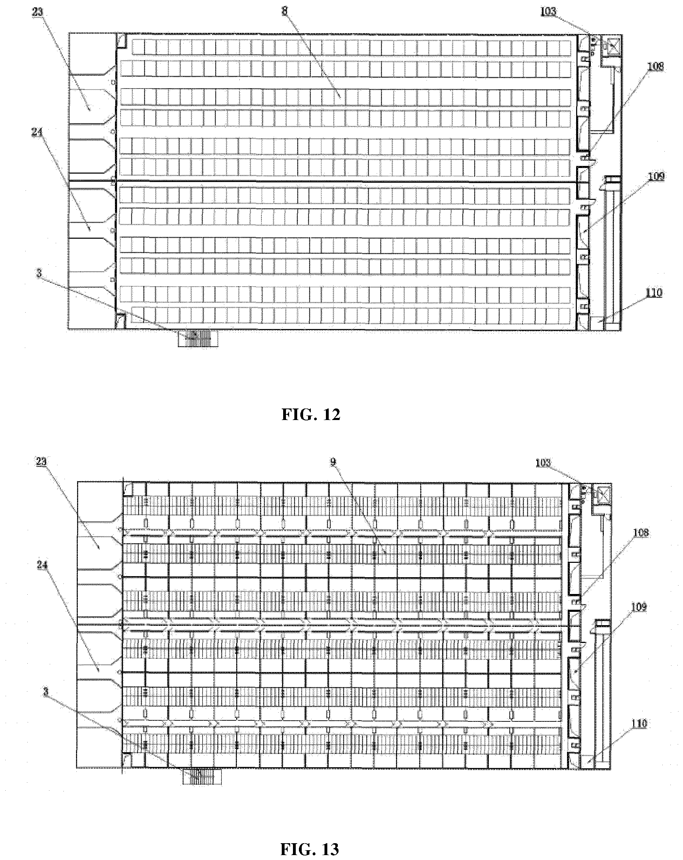

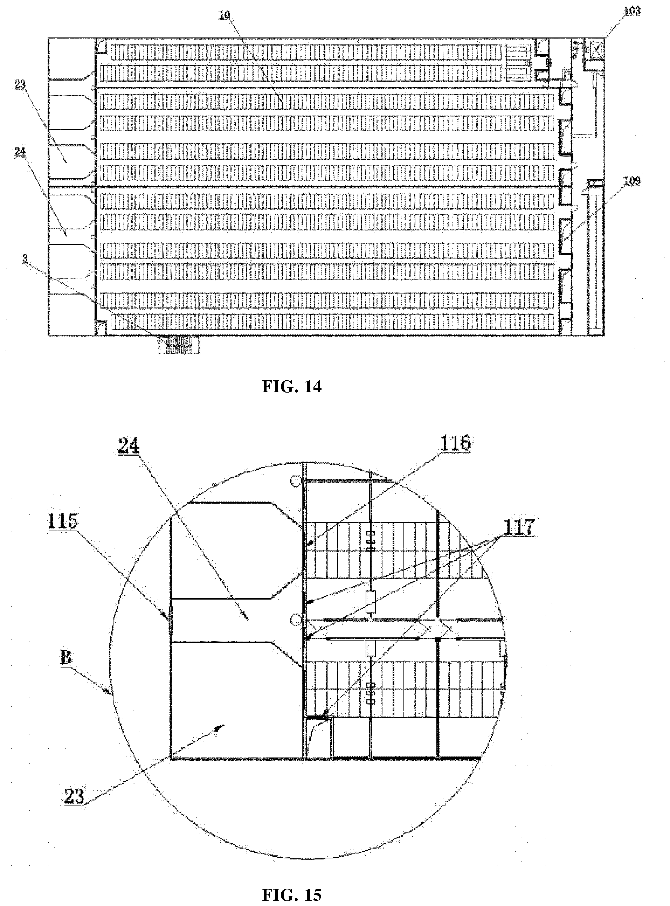

As shown in FIGs. 2, 3 and 7-14, an air exchange mechanism is provided at a left end of the house body 1 in FIG. 2, and an environment regulating mechanism is provided in each breeding storey of the house body 1 and is directly opposite to the air exchange mechanism in the house body 1. The left end of the air duct 13 is in communication with the air exchange mechanism, the right end of the air duct 13 extends into the environment regulating mechanism, and the upper portion of the left end of the fecal ditch branch 12 is in communication with the air exchange mechanism.

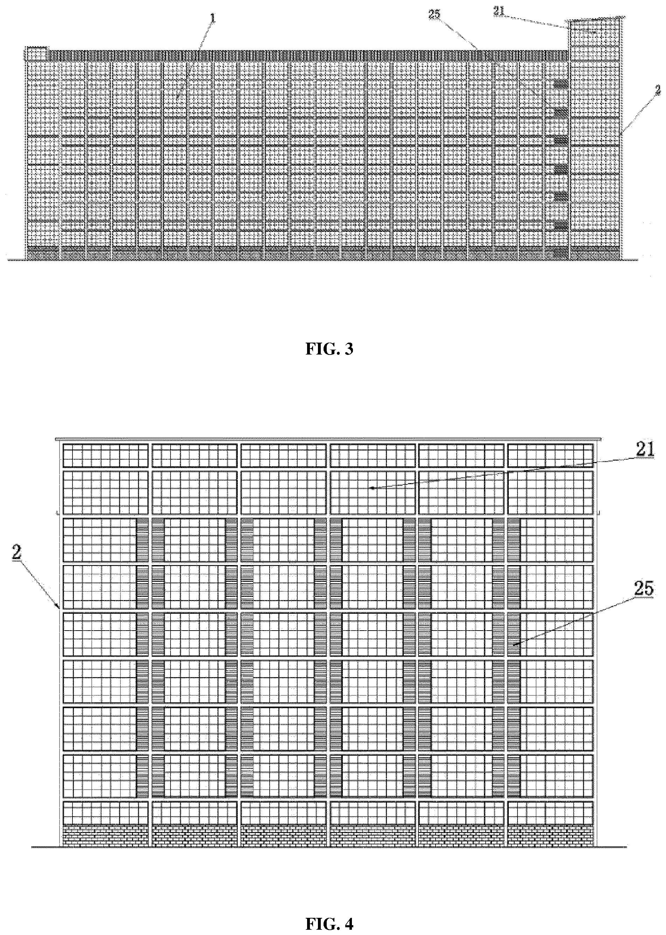

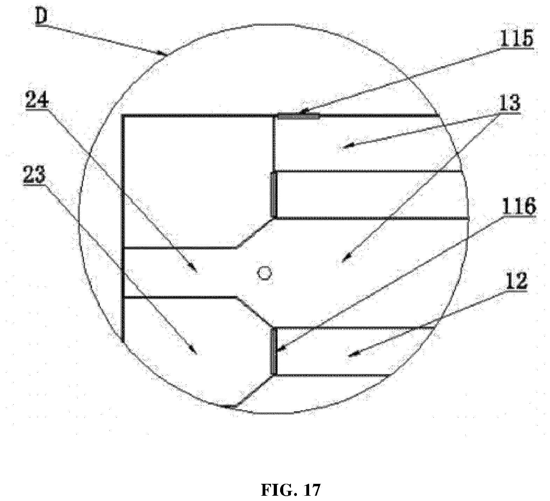

As shown in FIGs. 2-5, 11 and 17, the air exchange mechanism is the ventilation building 2. Five air intake chambers 24 that are all in combination with the air ducts 13 in the middles of the all breeding storeys respectively are arranged in the ventilation building 2 and are separated from each other. Each of the air intake chambers 24 is provided with exhaust chambers 23 on its both sides, and the exhaust chambers 23 are in communication with the upper portions of the fecal ditch branches 12 in each breeding storey. Air inlets 115 are formed on left outer side walls of the left end of the air ducts 13 at front and rear ends of each breeding storey. As shown in FIG. 4, another air inlet 115 is formed on a side wall of each air intake chamber 24 at the end of the house body 1. An air outlet chamber 21 in communication with the exhaust chamber 23 is provided at the top of the ventilation building 2 and disposed higher than the top of the house body 1, and multiple exhaust fans 22 are mounted on the right side wall of the air outlet chamber 21.

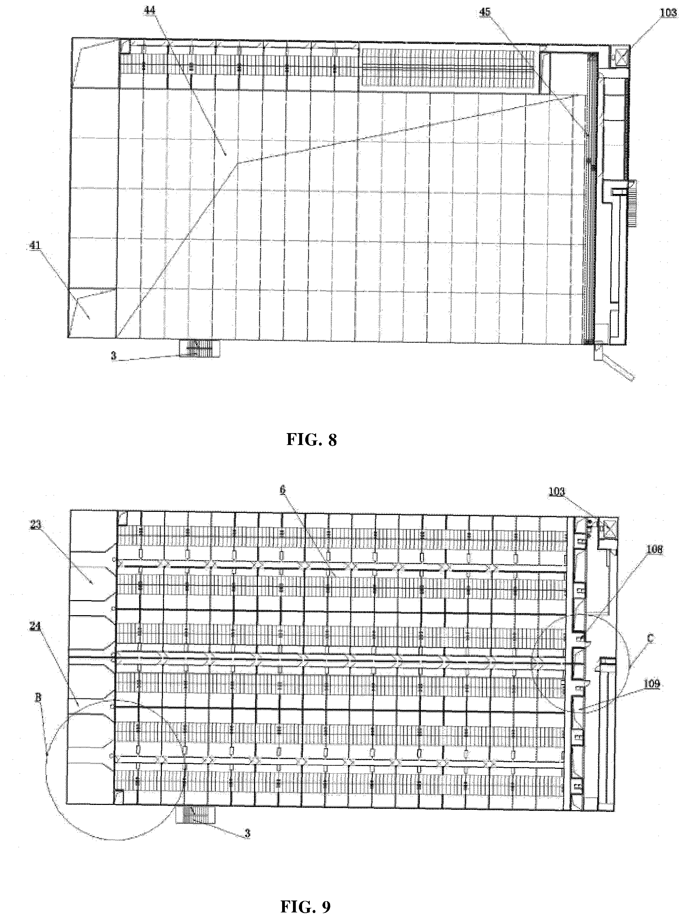

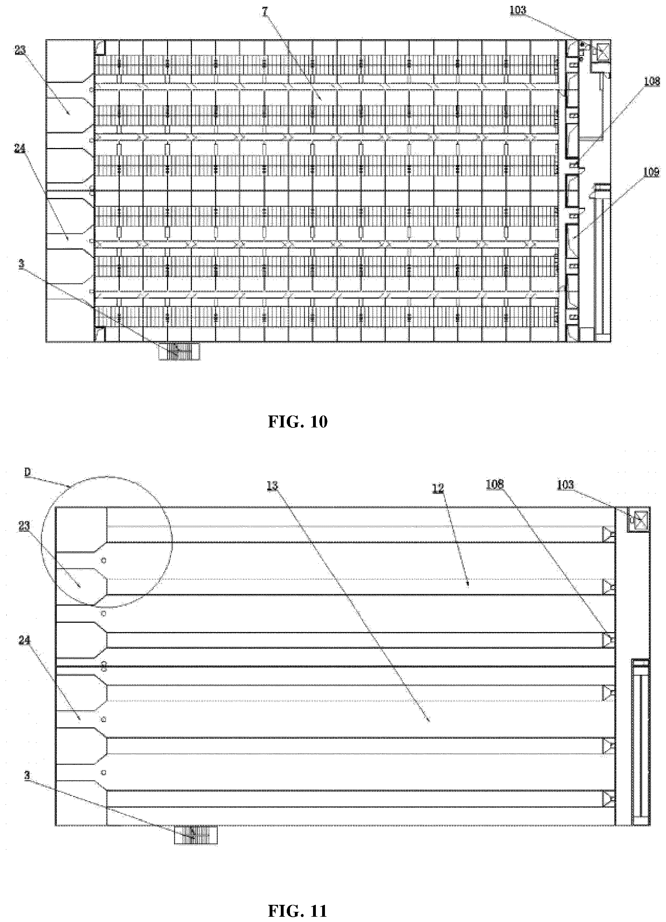

As shown in FIGs. 9, 11, 15 and 17, an air exchange fan 117 is provided on the side wall of the breeding storey above the left end of each air duct 13 in FIGs. 9 and 11 to discharge the air in the breeding storey into the air intake chamber 24 or the air duct 13. An air exhaust window 116 for communicating each fecal ditch branch 12 with the exhaust chamber 23 is mounted at the left end of the fecal ditch branch 12, and another air exhaust window 116 for communicating each breeding storey with the exhaust chamber 23 is mounted on the side wall of the breeding storey above the left end of the fecal ditch branch 12. The air exhaust window 116 is a casement window. Each fecal ditch branch 12 is provided with a feces scraper. The feces scraper is connected with a wire rope for traction, and the wire rope is connected with a traction motor.

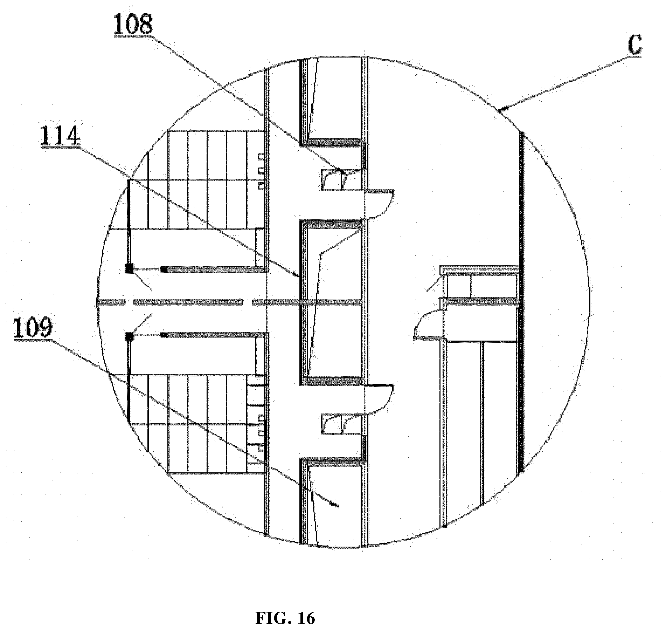

As shown in FIGs. 9, 10, 12, 13, 14 and 16, each of the first breeding storey 10, the second breeding storey 9, the third breading storey 8, the fourth breeding storey 7, the first cultivating storey 5, and the second cultivating storey 6 is provided with a faces outlet 108 in communication with each fecal ditch branch 12 correspondingly. The environment regulating mechanism is distributed on both sides of each feces outlet 108, and the feces outlets 108 on adjacent storeys of the environment regulating mechanism communicate with each other. The environment regulating mechanism includes an environment regulating chamber 109, the bottom of which is in communication with the air duct 13, and an environment regulating device is mounted on the side wall of the environment regulating mechanism. In this embodiment, the environment regulating device may be a wet curtain 114, an electric heating net or a heat-preserving rolling curtain, which can be specifically selected according to different seasons. When the temperature is high in summer, the wet curtain 114 is used for cooling, and when the temperature is low in winter, the electric heating net or the heat-preserving rolling curtain is used for temperature preservation or temperature increasing. The storeys having the wet curtains are all provided with water curtain pools 110.

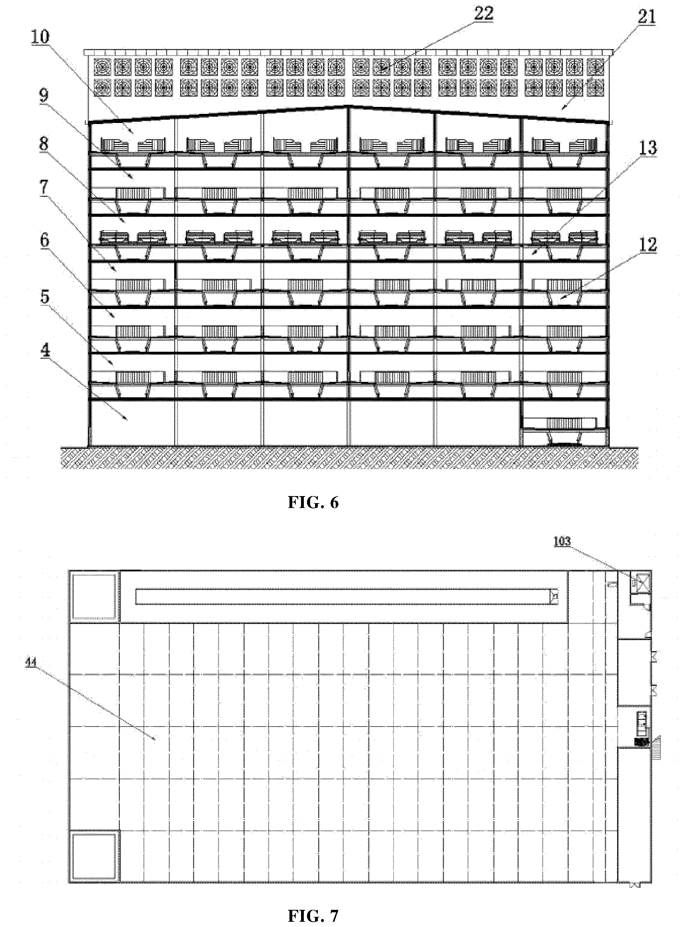

For the first breeding storey as shown in FIGs. 6, 7 and 8, a composting storey 4 is provided under the cultivating storey, and the composting storey 4 has a for-sale layer and a processing layer located below the former. The for-sale layer is provided with a tilted main fecal ditch 45 whose lower end is in communication with the feces collecting tank, and the feces outlets 108 of storeys above the for-sale layer are all in communication a top wall of the main fecal ditch 45. The composting storey 4 has a deodorizing mechanism that is a water pool, and multiple composting chambers 44.

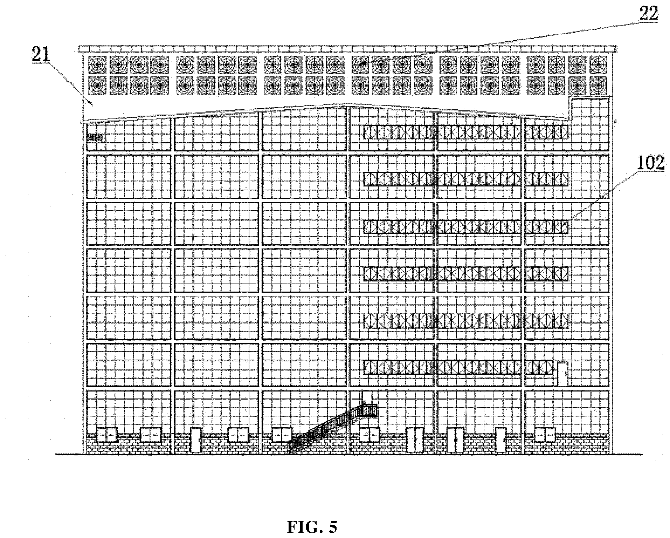

As shown in FIGs. 2 and 5, a corridor is provided outside each storey of the house body 1, and an external staircase 3 for connecting the corridors of the all storeys is provided outside the house body 1. Lighting windows 102 are provided in walls of the house body 1, and an elevator 103 is provided inside the house body 1.

The specific implementation process is as follows. During the breeding process, breeding workers enter each storey through the elevator 103 or the external staircase 3 to perform the breeding management. The breeding management in different growth stages can be carried out in the first breeding storey 10, the second breeding storey 9, the third breeding storey 8, the fourth breeding storey 7, the first cultivating storey 5, and the second cultivating storey 6 in the breeding process.

The feces produced in each breeding storey during the breeding process enters the fecal ditch branches 12. The feces in the fecal ditch branches 12 is scraped into the feces outlets 108 through the scraper driven by the traction motor with the wire rope, and then enters the main fecal ditch 45 from the feces outlets 108. Finally, the feces enter the feces collecting tank from the main fecal ditch 45, and the feces in a backup isolation chamber is directly discharged into the feces collecting tank. The feces as collected may be composted indoors in the composting chamber 44 to form renewable compost.

The ventilation management process in the house body 1 is as follows. The external air enters the air intake chamber 24 from the fly-proof and bird-proof net 25, and then enters the air duct 13 from the air intake chamber 24. The air in the breeding storey may be discharged into the air intake chamber 24 through the air exchange fan 117 during this process to mix with the external air, so that the air in the air intake chamber 24 is preliminarily mixed and adjusted, and the oxygen in the air in the breeding storey can also be fully utilized. Upon flowing to the environment regulating chamber 109, the air in the air ducts 13 exchanges heat with the fecal ditch branches 12 to further adjust the temperature, which, especially in winter, can enable the air entering the environment regulating chamber 109 to have a certain temperature and thereby reduce the heating cost in the environment regulating chamber 109. After entering the environment regulating chamber 109, the air in the air ducts 13 is further adjusted by the wet curtain 114 or the electric heating net, so that the air entering the breeding storey is more suitable for the growth of animals. By controlling the exhaust window 116, the foul air and odor produced by animal activities enters the air outlet chamber 21 from the exhaust chamber 23, and is then discharged to outside from the air outlet chamber 21 by the exhaust fans 22. Through the control of the exhaust window 116, when only deodorization is needed, it only requires to open the exhaust window 116 where the upper part of the fecal ditch 12 communicates with the exhaust chamber 23; and when it is necessary to increase ventilation to speed up deodorization and increase the air flow in the breeding storey to reduce the temperature, the air exhaust windows 116 between the fecal ditch branch 12 and the exhaust chamber 23 and between the breeding storey and the exhaust chamber 23 can all be opened.

## Claims

1. A multi-storey animal house, comprising: a multi-storey house body in which multiple breeding storeys are provided, wherein an air exchange mechanism in communication with each breeding storey is arranged at one end of the house body, and the air exchange mechanism is divided into air intake managing ends and exhaust managing ends, the exhaust managing ends being arranged on both sides of each air intake managing end respectively.

2. The multi-storey animal house according to claim 1, wherein an interlayer is arranged at the bottom of each breeding storey, multiple parallel fecal ditch branches are provided in each interlayer, a hole in communication with each fecal ditch branch is formed in the ground of the breeding storey at the top of the fecal ditch branch, and air ducts are provided in parallel on both sides of each fecal ditch branch.

3. The multi-storey animal house according to claim 2, wherein the air exchange mechanism is a ventilation building, the air intake managing end is an air intake chamber, the exhaust managing end is an exhaust chamber, an environment regulating mechanism is provided in each breeding storey of the house body, one end of the air duct is in communication with the air intake chamber, the other end of the air duct extends into the environment regulating mechanism, and an upper portion of one end of the fecal ditch branch is in communication with the exhaust chamber.

4. The multi-storey animal house according to claim 3, wherein the environment regulating mechanism is directly opposite to the air exchange mechanism in the house body.

5. The multi-storey animal house according to claim 4, wherein the breeding storeys comprise a first breeding storey, a second breeding storey, a third breeding storey, a fourth breeding storey, a first cultivating storey, and a second cultivating storey which are sequentially arranged from top to bottom.

6. The multi-storey animal house according to claim 5, wherein an air inlet is formed on a side wall of one end, near the ventilation building, of the air duct at the end of each breeding storey, and another air inlet is formed on a side wall of each air intake chamber at the end of the house body; and an air outlet chamber in communication with the exhaust chamber is provided at the top of the ventilation building and disposed higher than the top of the house body, and multiple exhaust fans are mounted on a side wall of the exhaust chamber facing the house body.

7. The multi-storey animal house according to claim 6, wherein a feces outlet in communication with the fecal ditch branch is provided in each breeding storey, the environment regulating mechanism is located on both sides of the feces outlet, and the feces outlets in adjacent storeys are in communication with each other.

8. The multi-storey animal house according to claim 7, wherein a composting storey is provided under the breeding storey, a feces collecting tank is provided under the composting storey, the composting storey has a for-sale layer and a processing layer located below the for-sale layer, the for-sale layer is provided with a tilted main fecal ditch whose lower end is in communication with the feces collecting tank at a lower end, and the feces outlets of storeys above the for-sale layer are all in communication with the top of the main fecal ditch.

9. The multi-storey animal house according to claim 8, wherein a deodorizing mechanism and multiple composting chambers are arranged in the composting storey.

10. The multi-storey animal house according to any one of claims 1-9, wherein a corridor is provided outside each storey of the house body, an external staircase for connecting the corridors of the all storeys is provided outside the house body, and a lighting window is provided in a wall of the house body.
